# EUROPEAN PATENT APPLICATION

(11) **EP 4 760 918 A1**
(43) Date of publication of application: **17.06.2026**
(21) Application number: 24874905.3
(22) Date of filing: 26.09.2024
(51) Int. Cl.: H01M 50/242, H01M 50/291, H01M 10/659

(54) **BATTERY PACK**

(30) Priority: 06.10.2023 KR 20230133781
(71) Applicant: LG Energy Solution, Ltd., Seoul 07335 (KR)
(72) Inventor: JEONG, Chan Ho, Daejeon 34122 (KR); LEE, So Jeong, Daejeon 34122 (KR); PARK, Jin Soo, Daejeon 34122 (KR)
(74) Representative: Plasseraud IP
(86) International application number: PCT/KR2024/014606
(87) International publication number: WO 2025/075347

(57) **Abstract**

The present invention relates to a battery pack, and more particularly, to a battery pack capable of effectively absorbing heat when thermal runaway occurs within the battery pack due to an event (impact, internal/external short circuit, etc.) within the battery pack, and blocking a heat transfer path within the battery pack to prevent the thermal runaway starting from one battery module from being transmitted to other battery modules.

## Description

### TECHNICAL FIELD

### CROSS-REFERENCE TO RELATED APPLICATION

The present application claims the benefit of the priority of Korean Patent Application No. 10-2023-0133781, filed on October 6, 2023, which is hereby incorporated by reference in its entirety.

### TECHNICAL FIELD

The present invention relates to a battery pack, and more particularly, to a battery pack capable of effectively absorbing heat when thermal runaway occurs within the battery pack due to an event (impact, internal/external short circuit, etc.) within the battery pack, and blocking a heat transfer path within the battery pack to prevent the thermal runaway starting from one battery module from being transmitted to other battery modules.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Secondary battery are receiving much attention as energy sources in a variety of products such as mobile devices and electric vehicles. The secondary batteries are excellent energy resources capable of replacing the use of existing products that use fossil fuels and are receiving attention as eco-friendly energy sources because the secondary batteries do not produce by-products from the energy use.

Recently, as needs for large-capacity secondary battery structures in addition to the use of secondary batteries as energy storage sources, demands for battery packs having a multi-module structure in which battery modules, in which a plurality of secondary batteries are connected in series or parallel to each other, are assembled is increasing.

When configuring a battery pack by connecting a plurality of battery cells in series/parallel to each other, it is common to configure a battery module provided as at least one battery cell by adding a battery module assembly, in which the plurality of battery modules are assembled, and other components.

A conventional battery pack typically includes battery modules arranged in a plurality of rows and a pack housing that accommodates the plurality of battery modules. In addition, the battery pack may further include a cross beam that partitions the battery module rows from each other.

In the conventional battery pack, thermal runaway may occur when an impact occurs within the battery pack or when an internal or external electrical short occurs. In addition, if the thermal runaway occurs in one battery module, thermal propagation (TP) may occur to adjacent battery modules.

In the case of the conventional battery pack, if the thermal runaway and the thermal propagation are not effectively blocked, a major accident such as large fire may occur, which has been a problem. Thus, there was a need for a method for effectively blocking the thermal runaway and the thermal propagation.

### DISCLOSURE OF THE INVENTION

### TECHNICAL PROBLEM

The present invention has been made to solve the above problems, and an object of the present invention is to provide a battery pack capable of effectively absorbing heat when thermal runaway occurs within the battery pack due to an event (impact, internal/external short circuit, etc.) within the battery pack, and blocking a heat transfer path within the battery pack to prevent the thermal runaway starting from one battery module from being transmitted to other battery modules.

### TECHNICAL SOLUTION

A battery pack according to the present invention includes: a plurality of battery modules; a pack housing configured to accommodate the plurality of battery modules therein; a cross beam disposed between the battery module and the battery module within the pack housing and having a hollow therein; and an absorbent material disposed in the hollow of the cross beam to absorb heat released from the battery modules.

The cross beam may be provided in the form of empty tube therein, and an opening may be defined in bottom surface of the cross beam facing a bottom surface of the pack housing.

The cross beam may be coupled to a bottom surface of the pack housing by a coupling member.

The coupling member may include: a head disposed outside the cross beam; and a pillar extending from the head with a narrower width than the head and passing through the cross beam, wherein a lower end of the pillar may pass through the opening defined in the bottom surface of the cross beam and be coupled to the bottom surface of the pack housing.

The coupling member may be configured to couple the cross beam to the bottom surface of the pack housing in a state in which the cross beam is spaced a predetermined distance (G) from the bottom surface of the pack housing.

The absorbent material may include a material that is changed in phase from solid to liquid by absorbing the heat released from the battery modules.

The absorbent material may include at least one of paraffins, fatty acids, or salt hydrates.

After the absorbent material is changed in phase into the liquid, the absorbent material may get out of the hollow of the cross beam and is discharged to the outside of the cross beam.

The absorbent material that is changed in phase into the liquid may be discharged to the outside of the cross beam through the opening of the cross beam.

A means for discharging the absorbent material to the outside may be provided in the opening of the cross beam.

The means may be provided as a valve, and the valve may be opened when a specific pressure is reached.

### ADVANTAGEOUS EFFECTS

The battery pack according to the present invention may include the plurality of battery modules, the pack housing accommodating the plurality of battery modules therein, the cross beam disposed between the battery modules within the pack housing and having the hollow therein, and the absorbent material disposed within the hollow the cross beam to absorb the heat released from the battery module. Thus, when the thermal runaway within the battery pack, which is generated by the event (the impact, the internal/external short circuit, etc.) within the battery pack, occurs, the heat may be effectively absorbed to block the heat transfer path within the battery pack, thereby preventing the thermal runaway starting from one battery module from being transmitted to other battery modules.

### BRIEF DESCRIPTION OF THE DRAWINGS

FIG. 1 is a plan view of a battery pack according to Embodiment 1 of the present invention.
FIG. 2 is a cross-sectional view taken along line A-A' of FIG. 1.
FIG. 3 is a cross-sectional view of a portion corresponding to FIG. 2 in a battery pack according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

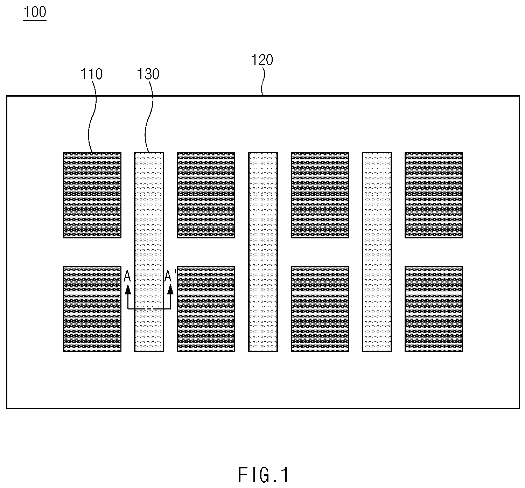

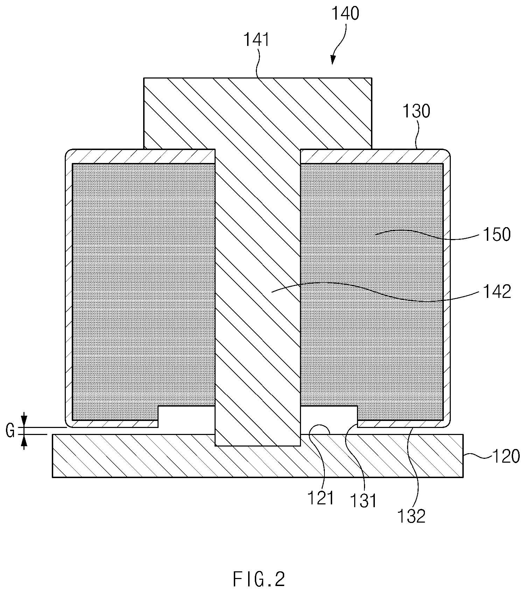

FIG. 1 is a plan view of a battery pack according to Embodiment 1 of the present invention. FIG. 2 is a cross-sectional view taken along line A-A' of FIG. 1.

Hereinafter, a battery pack according to Embodiment 1 of the present invention will be described with reference to FIGS. 1 to 2.

The battery pack according to Embodiment 1 of the present invention may include a battery module, a pack housing, a cross beam, and an absorbent material.

The battery module 110 may be provided with a plurality of secondary batteries (not shown) and a module case including the plurality of secondary batteries. The battery module 110 may be provided in plurality within the pack housing 120.

The pack housing 120 may be configured to accommodate the plurality of battery modules 110 therein. The battery modules 110 may be arranged in a plurality of rows within the pack housing 120. That is, referring to FIG. 1, two battery modules 110 may be arranged in a row, and four rows of the battery modules 110 may be disposed in a horizontal direction.

The cross beam 130 may be disposed between the battery modules 110 within the pack housing 120. In addition, the cross beam 130 may have a configuration in which the hollow is defined therein. Specifically, the cross beam 130 may be provided in the form of an empty tube. The cross beam 130 may have a rectangular cross-section and may be provided in the form of a tube extending in a length direction or width direction of the battery module 110.

When the battery modules 110 are arranged in a plurality of rows, the cross beam 130 may be disposed between a first row of battery modules 110 and a second row of battery modules 110 adjacent to the first row. The cross beam 130 may include a metal material. The cross beam 130 may serve to partition the row of battery modules 110 and the row of battery modules 110 from each other and may also serve to improve durability of the pack housing 120. In addition, the presence of the cross beam 130 itself may block thermal runaway from being directly transmitted from battery module 110 to the battery module 110 to some extent. However, the present invention may significantly improve the function of the blocking.

Referring to FIG. 2, the absorbent material 150 may be a material disposed within the hollow of the cross beam 130. In addition, the absorbent material 150 may be a material that absorbs heat. The absorbent material 150 may be a material that absorbs heat from the battery module 110.

Thus, the battery pack 100 according to Embodiment 1 of the present invention, which has such a configuration, may primarily absorb the heat and then more effectively absorb the heat when the thermal runaway occurs within the battery pack 100 due to an event (an impact, an internal/external short circuit, etc.) within the battery pack 100. Since the cross beam 130 is disposed just next to the battery module 110, the heat generated in the battery module 110 may be directly transferred to the cross beam 130 and may be effectively absorbed by the absorbent material 150 within the cross beam 130.

The absorbent material 150 may be, for example, a material (phase change material (PCM)) that undergoes a phase change when absorbing the heat. Particularly, the absorbent material 150 may be a material that is changed in phase from solid to liquid when a certain temperature is reached. In this case, when the absorbent material 150 absorbs heat from the battery module 110, the absorbent material 150 may be changed in phase from solid to liquid. When the material that is changed in phase in this manner is used, an amount of heat absorption may increase, and thus, the heat absorption may be effectively achieved when the thermal runaway occurs in the battery module 110.

For example, the absorbent material 150 may be at least one of paraffins, fatty acids, or salt hydrates.

In addition, the absorbent material 150 may be changed into a liquid and then be get out of the hollow of the cross beam 130 and be discharged to the outside of the cross beam 130. The absorbent material 150 may also function as a material that blocks heat propagation when the absorbent material 150 gets out of the hollow of the cross beam 130 and then is discharged outside the cross beam 130. Since the absorbent material 150 is in the liquid phase change state, the absorbent material 150 may serve to block flames, and when a material having relatively high specific heat is used, the absorbent material 150 may also serve to effectively block the heat propagation.

Referring to FIG. 2, the cross beam 130 may be connected to a bottom surface 121 of the pack housing by a coupling member. The coupling member may be, for example, a long-axis bolt. Specifically, the coupling member may include a head 141 and a pillar 142. The head 141 may be a portion disposed outside the cross beam 130. In addition, the head may be wider or larger than the pillar 142.

The pillar 142 may be configured to extend from the head 141 with a narrower width than the head 141 and pass through the cross beam 130. A through-hole may be defined in the cross beam 130 so that the pillar 142 passes through the cross beam 130. A width or diameter of the head 141 may be larger than a diameter of the through-hole defined in the cross beam 130. Thus, the head 141 may not enter the cross beam 130.

A lower end of the pillar 142 may be connected to the bottom surface 121 of the pack housing by passing through an opening 131 defined in a bottom surface 132 of the cross beam. A method in which the lower end of the pillar 142 is connected to the bottom surface 121 of the pack housing may include screw coupling or coupling using an adhesive. The cross beam 130 coupled to the pack housing 120 by a coupling member 140 may align positions between battery modules 110 or serve as a guide line.

The opening 131 may be defined in the bottom surface 132 of the cross beam facing the bottom surface 121 of the pack housing. The absorbent material 150 that has changed into the liquid may be discharged to the outside of the cross beam 130 through the opening 131 defined at a lower side of the cross beam 130 in a manner of flowing downward. The absorbed material 150 discharged in this manner may flow between the battery modules 110 and the battery modules 110. Thus, a heat transfer path may be blocked. In addition, in a situation in which the flame or the thermal runaway is propagated, the absorbent material 150 may serve to block the propagation of the flame or thermal runaway. In this manner, the heat transfer path within the battery pack 100 may be blocked to prevent the thermal runaway starting from one battery module 110 from being transmitted to other battery modules 110.

The battery pack 100 according to Embodiment 1 of the present invention may primarily absorb heat as the absorbent material 150 while being melted when a specific temperature is reached, and the melted absorbent material 150 may flow downward through a lower drain structure to block the heat transfer path between the battery modules 110, thereby preventing the propagation of the thermal runaway.

The coupling member 140 may couple the cross beam 130 to the bottom surface 121 of the pack housing in a state in which the cross beam 130 is spaced a predetermined distance G from the bottom surface 121 of the pack housing. Due to this structure, the absorbent material 150 flowing to a lower side of the cross beam 130 may be quickly spread to a circumferential surface of the cross beam 130 to quickly block the heat transfer path between the battery modules 110 and the battery modules 110.

### Embodiment 2

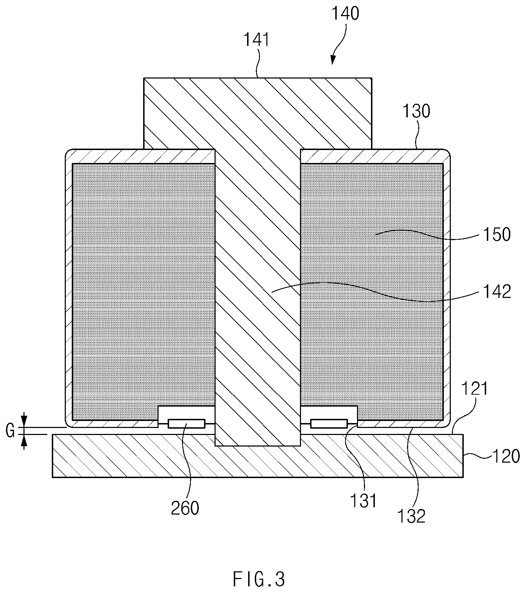

FIG. 3 is a cross-sectional view of a portion corresponding to FIG. 2 in a battery pack according to Embodiment 2 of the present invention.

Embodiment 2 of the present invention differs from Embodiment 1 in that a means for discharging an absorbent material into a lower opening of a cross beam is further provided.

The contents that are duplicated with Embodiment 1 will be omitted as much as possible, and Embodiment 2 will be described with a focus on the differences. That is, it is obvious that if contents that are not described in Embodiment 2 are needed, it may be regarded as the contents of Embodiment 1.

Referring to FIG. 3, a battery pack according to Embodiment 2 of the present invention may include a battery module 110, a pack housing 120, a cross beam 130, and an absorbent material 150 similar to those in Embodiment 1. However, in the battery pack according to Embodiment 2 of the present invention, a means for discharging the absorbent material 150 to the outside may be provided in an opening 131 of the cross beam 130. The means may be provided as a valve 260. The valve 260 used here may be, for example, opened when a specific pressure is reached.

Specifically, when a specific temperature is reached, a pressure within the cross beam 130 may increase when the absorbent material 150 undergoes a phase change from solid to liquid. For example, the absorbent material 150 may be a material of which a volume is expanded as it is changed in phase from the solid to the liquid. When the absorbent material 150 undergoes the phase change, an internal pressure within the cross beam 130 may increase. As the internal pressure within the cross beam 130 increases in this manner, the valve 260 may be opened to allow the absorbent material 150 to pass through the opening 131 of the cross beam 130 and then be discharged to the outside of the cross beam 130.

The valve 260 may be, for example, a relief valve or a safety valve, but may also be a valve having a simple membrane or plug shape. That is, in the case of the valve in the form of the simple membrane or plug, the valve may be a valve that completely and irreversibly opens the opening 131 of the cross beam 130 when a specific pressure is reached. When this valve 260 is opened, the entire absorbent material 150 inside the cross beam 130 may be discharged to the outside of the cross beam 130 at once. If the valve 260 having the structure in which the entire absorbent material 150 is discharged to the outside of the cross beam 130 at once is used, it may also serve to quickly and effectively block the heat transfer.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

- 100:: Battery pack
- 110:: Battery module
- 120:: Pack housing
- 121:: Bottom surface of pack housing
- 130:: Cross beam
- 131:: Opening
- 132:: Bottom surface of pack housing
- 140:: Coupling member
- 141:: Head
- 142:: Pillar
- 150:: Absorbent material
- 260:: Valve
- G:: Predetermined distance

## Claims

1. A battery pack comprising:
a plurality of battery modules;
a pack housing configured to accommodate the plurality of battery modules therein;
a cross beam disposed between the battery module and the battery module within the pack housing and having a hollow therein; and
an absorbent material disposed in the hollow of the cross beam to absorb heat released from the battery modules.

2. The battery pack of claim 1, wherein the cross beam is provided in the form of empty tube therein, and
an opening is defined in bottom surface of the cross beam facing a bottom surface of the pack housing.

3. The battery pack of claim 2, wherein the cross beam is coupled to a bottom surface of the pack housing by a coupling member.

4. The battery pack of claim 3, wherein the coupling member comprises:
a head disposed outside the cross beam; and
a pillar extending from the head with a narrower width than the head and passing through the cross beam,
wherein a lower end of the pillar passes through the opening defined in the bottom surface of the cross beam and is coupled to the bottom surface of the pack housing.

5. The battery pack of claim 3, wherein the coupling member is configured to couple the cross beam to the bottom surface of the pack housing in a state in which the cross beam is spaced a predetermined distance (G) from the bottom surface of the pack housing.

6. The battery pack of claim 2, wherein the absorbent material is a material that is changed in phase from solid to liquid by absorbing the heat released from the battery modules.

7. The battery pack of claim 2, wherein the absorbent material is at least one of paraffins, fatty acids, or salt hydrates.

8. The battery pack of claim 6 or 7, wherein, after the absorbent material is changed in phase into the liquid, the absorbent material gets out of the hollow of the cross beam and is discharged to the outside of the cross beam.

9. The battery pack of claim 8, wherein the absorbent material that is changed in phase into the liquid is discharged to the outside of the cross beam through the opening of the cross beam.

10. The battery pack of claim 8, wherein a means for discharging the absorbent material to the outside is provided in the opening of the cross beam.

11. The battery pack of claim 10, wherein the means is provided as a valve, and
the valve is opened when a specific pressure is reached.
